# FASCICULE DE BREVET EUROPEEN

(11) **EP 3 340 353 B1**
(45) Date de publication et mention de la délivrance du brevet: **11.12.2019**
(21) Numéro de dépôt: 17208601.9
(22) Date de dépôt: 19.12.2017
(51) Int. Cl.: H01M 8/04089, H01M 8/0438, H01M 8/04746, H01M 8/04082

(54) **SYSTEME ELECTROCHIMIQUE A PILE A COMBUSTIBLE COMPORTANT UN DISPOSITIF DE REGULATION DE PRESSION A DETENDEUR**
ELEKTROCHEMISCHES SYSTEM MIT BRENNSTOFFZELLE, DAS EINE VORRICHTUNG ZUM EINSTELLEN DES DRUCKS MIT EXPANSIONSVENTIL UMFASST
ELECTROCHEMICAL SYSTEM WITH A FUEL CELL COMPRISING A PRESSURE-REDUCING CONTROL DEVICE

(30) Priorité: 23.12.2016 FR 1663299
(43) Date de publication de la demande: 27.06.2018
(73) Titulaire: COMMISSARIAT À L'ÉNERGIE ATOMIQUE ET AUX ÉNERGIES ALTERNATIVES, 75015 Paris (FR)
(72) Inventeur: POIROT-CROUVEZIER, Jean-Philippe, 38450 SAINT GEORGES DE COMMIERS (FR); BOUIX, Didier, 38240 MEYLAN (FR); REYNAUD, Roland, 38700 LE SAPPEY EN CHARTREUSE (FR); SAUZEDDE, François, 38500 COUBLEVIE (FR)
(74) Mandataire: GIE Innovation Competence Group

(56) Documents cités:
- FR-B1- 2 952 232
- FR-B1- 2 971 087
- US-A1- 2003 148 167
- US-A1- 2010 068 565
- US-A1- 2014 050 998

## Description

### DOMAINE TECHNIQUE

Le domaine de l'invention est celui des systèmes électrochimiques à pile à combustible comportant un dispositif de régulation de la pression d'un fluide d'alimentation en entrée de la pile à combustible.

### ÉTAT DE LA TECHNIQUE ANTÉRIEURE

Une pile à combustible comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène par exemple contenu dans de l'air) est amené au contact de la cathode. La réaction électrochimique est subdivisée en deux demi-réactions, l'une d'oxydation et l'autre de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs y sont apportés, les produits et les espèces non réactives en sont évacués ainsi que la chaleur produite lors de la réaction.

En sortie de pile, dans un fonctionnement dit en mode ouvert, les sorties d'anode et de cathode communiquent avec un conduit d'évacuation des fluides. Ainsi, lorsqu'on alimente la pile en sur-stœchiométrie (rapport supérieur à 1 entre la quantité de réactif injecté et la quantité de réactif consommé), le gaz sortant présente un débit suffisant pour évacuer l'eau produite par la réaction, qui peut ensuite être collectée à l'aide d'un séparateur de phase. Pour éviter de perdre le réactif non consommé, une boucle de recirculation est habituellement prévue, qui permet de réinjecter le réactif non consommé en entrée de pile. Cependant, du fait de la recirculation fluidique, les espèces non réactives, tel que l'azote à l'anode dans le cas d'une alimentation en air à la cathode, voient leur concentration molaire augmenter progressivement, ce qui peut nécessite d'effectuer régulièrement une étape de purge de la pile à combustible.

Une régulation de la pression d'entrée d'au moins l'un des fluides d'alimentation, par exemple de l'hydrogène, peut être nécessaire pour éviter une dégradation prématurée des propriétés de la pile à combustible. En effet, à titre d'exemple, une variation de la puissance électrique fournie par la pile à combustible peut induire une augmentation ou une diminution de la pression d'hydrogène dans la pile à combustible, et donc former une différence de pression potentiellement importante de part et d'autre de la membrane électrolytique, ce qui peut conduire à une dégradation des propriétés de l'assemblage membrane électrodes.

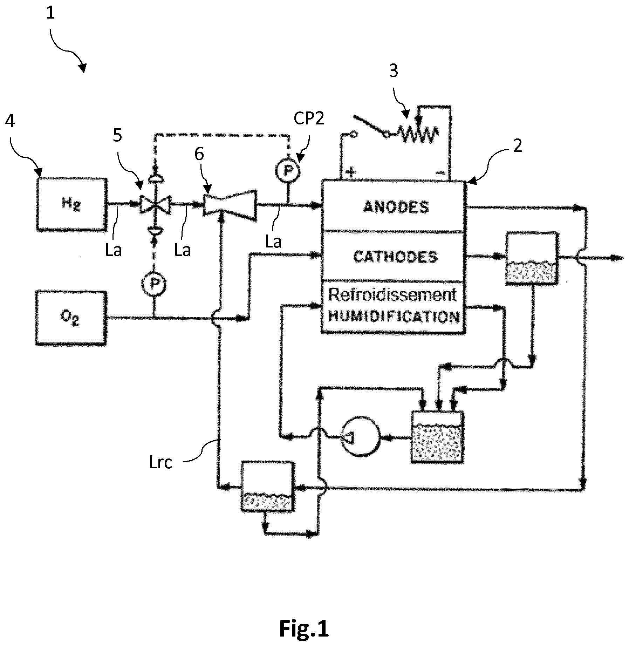

La figure 1 illustre un système électrochimique 1 à pile à combustible 2 tel que décrit dans le document US5441821, qui comporte un dispositif de régulation adapté à corriger la pression d'entrée P2 d'hydrogène lorsque celle-ci devient inférieure à une valeur minimale.

Le système électrochimique 1 comporte ainsi une pile à combustible 2 fluidiquement reliée à un réservoir 4 d'hydrogène sous pression. Le collecteur d'entrée anodique de la pile à combustible 2 permet l'introduction de l'hydrogène jusqu'aux anodes des cellules électrochimiques. La pile à combustible 2 est électriquement connectée à une charge électrique 3 qui est adaptée à imposer à la pile une valeur de puissance électrique instantanée à fournir.

Une ligne fluidique d'alimentation La relie le réservoir 4 au collecteur d'entrée anodique, et comporte un régulateur de pression 5 relié à la sortie du réservoir 4 qui maintient la pression du fluide d'alimentation en sortie sensiblement égale à une valeur de consigne.

Le système électrochimique 1 comporte une boucle de recirculation, qui comporte un éjecteur 6 disposé sur la ligne d'alimentation La entre le régulateur de pression 5 et le collecteur d'entrée, et une ligne fluidique de recirculation Lrc qui relie le collecteur de sortie à une entrée secondaire de l'éjecteur 6. La boucle de recirculation permet de réinjecter dans le collecteur d'entrée le gaz issu du collecteur de sortie, c'est-à-dire l'hydrogène non consommé et éventuellement des gaz non réactifs.

Le dispositif de régulation de la pression d'entrée comporte un capteur de pression CP2, disposé sur la ligne fluidique d'alimentation La, qui permet de mesurer la pression d'entrée P2 du fluide d'alimentation à l'entrée de la pile à combustible. Le capteur de pression CP2 est adapté à envoyer un signal de commande au régulateur de pression 5 pour modifier la valeur de consigne en fonction de la valeur mesurée de la pression d'entrée P2.

En fonctionnement, la charge électrique 3 peut induire une augmentation de la puissance électrique fournie par la pile à combustible 2, ce qui se traduit par une augmentation du débit molaire d'hydrogène en entrée de pile, et donc par une diminution de la pression d'entrée P2. Lorsque la valeur mesurée P2 de la pression d'entrée atteint une valeur minimale déterminée, le capteur de pression CP2 envoie un signal de commande au régulateur de pression 5 pour que la valeur de consigne soit augmentée. L'augmentation de la pression en sortie du régulateur de pression 5 permet d'éviter que la pression d'entrée P2 ne devienne inférieure à la valeur minimale.

Il existe cependant un besoin de disposer d'un dispositif de régulation de la pression d'entrée de la pile à combustible qui soit davantage performant.

Le document US2003/148167 porte sur un système électrochimique à pile à combustible comportant une boucle de recirculation à éjecteur. Une vanne est disposée en parallèle de l'éjecteur. La vanne permet ainsi de court-circuiter l'éjecteur dans le cas d'une forte demande en hydrogène.

### EXPOSÉ DE L'INVENTION

L'invention a pour objectif de remédier au moins en partie aux inconvénients de l'art antérieur, et plus particulièrement de proposer un système électrochimique à pile à combustible comportant un dispositif performant de régulation de la pression d'entrée, notamment en termes de dynamique de régulation. Pour cela, l'objet de l'invention est un système électrochimique comportant :
- une boucle de recirculation, comportant un éjecteur disposé sur ladite ligne fluidique d'alimentation, et une ligne fluidique de recirculation qui relie le collecteur de sortie à l'éjecteur ;
- un dispositif de régulation d'une pression dite d'entrée du fluide d'alimentation représentative d'une pression dudit fluide d'alimentation à l'intérieur de la pile à combustible, adapté à ce que la pression d'entrée reste supérieure ou sensiblement égale à une valeur seuil minimale déterminée.

Selon l'invention, le dispositif de régulation comporte un détendeur, disposé sur la ligne fluidique d'alimentation en parallèle d'au moins l'éjecteur, et présentant une valeur de consigne égale à ladite valeur seuil minimale, de sorte que le détendeur maintient la pression d'entrée égale à la valeur de consigne et donc à la valeur seuil minimale lorsqu'il est en position d'ouverture, et occupe une position de fermeture lorsque la pression d'entrée est supérieure à la valeur de consigne.

Certains aspects préférés mais non limitatifs de ce système électrochimique sont les suivants.

Un régulateur de pression peut être disposé sur la ligne fluidique d'alimentation, entre le réservoir et l'éjecteur pour imposer une valeur de pression du fluide d'alimentation en sortie dudit régulateur.

Ledit régulateur de pression peut être un régulateur de débit adapté à contrôler le débit molaire du fluide d'alimentation en réponse à la valeur imposée de pression, le détendeur étant disposé en parallèle avec, en outre, le régulateur de pression. Le régulateur peut ainsi être adapté à imposer une valeur de pression ou de débit en sortie du régulateur.

La ligne fluidique d'alimentation peut être configurée de sorte que la pression du fluide d'alimentation en sortie dudit détendeur est sensiblement égale à ladite pression d'entrée.

La valeur de consigne du détendeur peut être une valeur pilotée de manière pneumatique par un dispositif dit pilote.

Le système électrochimique peut comporter une ligne fluidique d'évacuation reliée fluidiquement au collecteur de sortie, adaptée à évacuer du gaz provenant du collecteur de sortie, le dispositif de régulation comportant un déverseur disposé sur la ligne d'évacuation et présentant une valeur de consigne égale à une valeur seuil maximale déterminée, de sorte que le déverseur maintient la pression d'entrée égale à la valeur de consigne et donc à la valeur seuil maximale lorsqu'il est en position d'ouverture, et occupe une position de fermeture lorsque la pression d'entrée est inférieure à la valeur de consigne.

Le système électrochimique peut comporter un dispositif de purge de la pile à combustible, comprenant un organe de commande de la valeur de consigne du déverseur adapté à porter momentanément ladite valeur de consigne à une valeur de purge prédéterminée inférieure à la valeur seuil maximale.

Le système électrochimique peut comporter un dispositif de purge de la pile à combustible, comprenant une vanne de purge, disposée sur la ligne fluidique d'évacuation en parallèle du déverseur, adapté à autoriser un écoulement continu de gaz à un débit molaire inférieur au débit molaire du gaz circulant dans la boucle de recirculation.

La valeur de consigne du déverseur peut être une valeur pilotée de manière pneumatique par un dispositif dit pilote.

La pile à combustible peut être connectée électriquement à une charge électrique apte à imposer à la pile à combustible une valeur de courant électrique à fournir.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique d'un système électrochimique selon un exemple de l'art antérieur ;
la figure 2A est une vue schématique d'un système électrochimique selon un premier mode de réalisation ; les figures 2B et 2C sont des vues schématiques en coupe transversale d'un exemple de détendeur équipant le dispositif de régulation de pression illustré sur la fig.2A, en position d'ouverture (fig.2B) et en position de fermeture (fig.2C) ;
la figure 3 est une vue schématique d'une variante du système électrochimique illustré sur la figure 2A ;
la figure 4A est une vue schématique d'un système électrochimique selon un deuxième mode de réalisation ; les figures 4B et 4C sont des vues schématiques en coupe transversale d'un exemple de déverseur équipant le dispositif de régulation de pression illustré sur la fig.4A, en position d'ouverture (fig.4B) et en position de fermeture (fig.4C).

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un système électrochimique comportant une pile à combustible et un dispositif de régulation de pression adapté à réguler une pression dite d'entrée d'un fluide d'alimentation, cette pression d'entrée étant représentative d'une pression du fluide d'alimentation à l'intérieur de la pile à combustible, par exemple dans un circuit de distribution anodique ou cathodique, afin qu'elle ne devienne pas inférieure à une valeur seuil minimale déterminée. Autrement dit, le dispositif de régulation permet que la pression d'entrée, et donc la pression du fluide d'alimentation à l'intérieur de la pile à combustible, reste supérieure ou sensiblement égale à la valeur seuil minimale prédéterminée.

La pression d'entrée peut être mesurée au niveau du collecteur d'entrée de la pile à combustible, par exemple sur la ligne fluidique d'alimentation reliée au collecteur d'entrée à un point de mesure choisi de telle sorte que la pression d'entrée est sensiblement égale à la pression du fluide d'alimentation à l'intérieur de la pile à combustible. Par sensiblement égale, on entend ici que la perte de charge entre le point de mesure de la pression d'entrée et un point de mesure quelconque de la pression à l'intérieur de la pile à combustible est négligeable par rapport aux valeurs desdites pressions. En variante, la perte de charge peut ne pas être négligeable, mais celle-ci étant connue, la mesure de la pression d'entrée permet de déduire la valeur de la pression du fluide d'alimentation à l'intérieur de la pile à combustible. D'une manière générale, la pression d'entrée peut être mesurée au niveau du collecteur de sortie de la pile à combustible, voire sur une ligne fluidique d'alimentation, d'évacuation ou de recirculation.

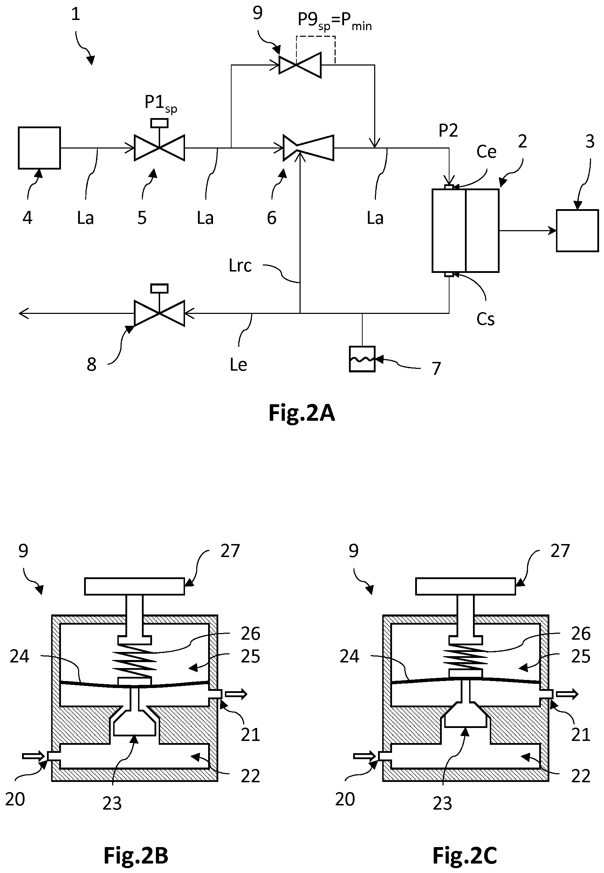

La figure 2A illustre de manière schématique un système électrochimique selon un premier mode de réalisation. On considérera ici en particulier le côté anode d'une pile à hydrogène, celle-ci étant alimentée en hydrogène côté anode et en air contenant de l'oxygène côté cathode. Cependant, l'invention s'applique également au côté cathode alimenté en air. Par ailleurs, l'invention s'applique à tout type de pile à combustible, en particulier à celles fonctionnant à basse température, c'est-à-dire à une température inférieure à 250 °C.

La pile à combustible 2 comporte au moins une cellule électrochimique, et ici un empilement de cellules électrochimiques (non représentées). Chaque cellule comporte une anode et une cathode séparées l'une de l'autre par une membrane électrolytique, cet ensemble formant un assemblage membrane électrodes (AME). L'anode, la membrane et la cathode sont des éléments classiques connus de l'homme du métier et ne sont donc pas décrites en détail.

Chaque assemblage est séparé de celui des cellules adjacentes par des plaques bipolaires, adaptées à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Elle peut également assurer l'écoulement d'un fluide caloporteur entre les cellules de manière à permettre l'évacuation de la chaleur produite.

La pile à combustible 2 comporte deux collecteurs d'entrée distincts, l'un anodique et l'autre cathodique, destinés à assurer l'injection fluidique des gaz d'alimentation jusqu'aux cellules, et deux collecteurs de sorties distincts correspondants, permettant d'évacuer les gaz d'alimentation non réagis et des espèces non réactives hors des cellules électrochimiques et de la pile à combustible 2. Ainsi, l'hydrogène est injecté dans la pile à combustible 2 par le collecteur d'entrée anodique Ce qui l'amène jusqu'aux cellules électrochimiques. L'hydrogène non réagi et les espèces non réactives sont ensuite évacués par le collecteur de sortie Cs correspondant.

La pile à combustible 2 peut, en fonctionnement, subir une variation de la demande de puissance électrique instantanée. C'est le cas notamment, comme décrit dans ce mode de réalisation, lorsque la pile à combustible 2 est connectée électriquement à une charge électrique 3 qui lui impose un signal représentatif d'une puissance électrique instantanée à fournir. Dans le cas où la pile à combustible 2 fonctionne en régime dit de courant électrique imposé, la charge électrique 3 impose à la pile à combustible 2 une valeur du courant électrique à fournir qui peut varier dans le temps. A titre illustratif, la charge électrique 3 peut être une batterie électrochimique, un supercondensateur ou autre.

La pile à combustible 2 est alimentée en un fluide d'alimentation, ici en hydrogène, à partir d'une source d'hydrogène sous pression, tel qu'un réservoir 4 d'hydrogène. Celui-ci est relié au collecteur d'entrée anodique Ce par une ligne fluidique d'alimentation La. L'hydrogène contenu dans le réservoir 4 est ainsi sous pression, par exemple à plusieurs bars ou dizaines de bars. Il peut être sous pression à plusieurs centaines de bars, le réservoir étant alors associé à un détendeur (non représenté) permettant de diminuer la pression de sortie de l'hydrogène.

Un régulateur de pression 5 est disposé sur la ligne d'alimentation La en aval du réservoir d'hydrogène 4. Le régulateur de pression 5 est adapté à maintenir une pression aval P1 sensiblement constante, inférieure à la pression de l'hydrogène contenu dans le réservoir 4, et indépendante des éventuelles variations de pression dans le réservoir 4. La pression aval P1 correspond à la pression de l'hydrogène en sortie du régulateur de pression 5. La valeur de la pression aval P1 est sensiblement égale à la valeur de consigne P1sp du régulateur de pression 5, cette valeur pouvant être pilotée ou non. Le régulateur de pression 5 est ici un détendeur qui impose une pression aval P1 sans contrôler la valeur du débit molaire d'hydrogène. En variante, il peut être un organe de régulation qui assure en outre un contrôle du débit molaire d'hydrogène, dont la valeur dépend de la valeur de la pression aval P1.

De manière similaire au document US5441821 mentionné précédemment, le régulateur de pression 5 peut présenter une valeur de consigne pilotée par un signal de commande émis par un capteur de la pression (non représenté) disposé à l'entrée de la pile à combustible et adapté à mesurer la pression d'entrée P2.

Le système électrochimique 1 comporte une boucle de recirculation formée d'une part d'un éjecteur 6 disposé sur la ligne d'alimentation La entre le régulateur de pression 5 et le collecteur d'entrée Ce anodique, et d'autre part d'une ligne fluidique de recirculation Lrc reliant fluidiquement le collecteur de sortie Cs anodique à une entrée dite secondaire de l'éjecteur 6.

L'éjecteur 6 comporte une entrée dite primaire reliée fluidiquement au régulateur de pression 5 par la ligne d'alimentation La, une entrée dite secondaire reliée fluidiquement au collecteur de sortie par la ligne de recirculation Lrc, et une sortie. Aussi, le gaz d'alimentation injecté à l'entrée primaire de l'éjecteur 6 forme un fluide dit moteur et le gaz de recirculation injecté à l'entrée secondaire forme un fluide dit aspiré. Le fluide moteur, par son débit, provoque par effet Venturi l'écoulement du fluide situé dans la ligne de recirculation Lrc, qui se mélange avec le fluide moteur avant d'être réinjecté dans la ligne d'alimentation La. Le fluide aspiré étant issu du collecteur de sortie Cs, il peut être formé d'hydrogène non réagi et d'espèces gazeuses non réactives tel que de l'azote ayant diffusé au travers de la membrane électrolytique.

La boucle de recirculation comporte de préférence un séparateur de phase 8, disposé sur la ligne de recirculation Lrc entre le collecteur de sortie Cs et l'éjecteur 6, qui est adapté à collecter l'eau liquide éventuellement présente en sortie de la pile à combustible 2.

Le système électrochimique 1 comporte avantageusement ici une ligne fluidique d'évacuation Le, reliée fluidiquement au collecteur de sortie Cs par la ligne de recirculation Lrc, et disposée en aval du séparateur de phase 7. Une vanne de purge 8 est ici disposée sur la ligne d'évacuation Le pour permettre l'évacuation continue ou momentanée de gaz. A titre d'exemple, la vanne de purge 8 peut assurer une évacuation faible mais continue du gaz issu du collecteur de sortie Cs, permettant ainsi de limiter l'augmentation dans le temps de la concentration d'espèces non réactives dans la boucle de recirculation.

Le système électrochimique 1 comporte en outre un dispositif de régulation de pression, adapté à maintenir la pression d'entrée P2 de l'hydrogène à une valeur supérieure ou égale à une valeur seuil minimale Pₘᵢₙ prédéterminée. Dans ce mode de réalisation, le dispositif de régulation est formé d'un détendeur 9 disposé sur la ligne d'alimentation La, en parallèle d'au moins l'éjecteur 6. Un détendeur 9 est un organe de régulation de la pression aval, c'est-à-dire qu'il est adapté à abaisser la pression du fluide à une valeur de consigne P9ₛₚ lorsqu'il est en position d'ouverture, et à occuper une position de fermeture lorsque la pression aval est supérieure à la valeur de consigne P9ₛₚ.

Les figures 2B et 2C illustrent un exemple de détendeur 9 conventionnel en position ouvert (fig.2B) et en position fermé (fig.2C). Le détendeur 9 est ici formé d'un conduit interne 22 reliant l'entrée 20 et la sortie 21 du détendeur 9, comportant une vanne dont une partie mobile 23 est fixée à une membrane flexible 24 délimitant une chambre de mesure 25, la membrane 24 étant contrainte en déplacement par un organe de rappel 26 tel qu'un ressort. Le ressort 26 est partiellement chargé au moyen d'un volant de commande 27 permettant de fixer la valeur de consigne P9ₛₚ, égale ici à la valeur seuil minimale Pₘᵢₙ. En variante, la valeur de consigne P9ₛₚ peut être pilotée, par exemple de manière pneumatique au moyen d'un fluide de commande provenant d'un dispositif pilote, permettant ainsi d'obtenir une plus grande précision sur la définition de la valeur de consigne et un temps de réponse plus court en cas de modification de cette valeur de consigne.

D'une manière générale, en référence à la figure 2B, le détendeur 9 est en position d'ouverture lorsqu'il y a équilibre entre la force de pression qu'exerce le fluide sur la partie mobile de la vanne et la force de rappel exercée par le ressort. Ainsi, quelle que soit la valeur de la pression amont à l'entrée 20, ici sensiblement égale à P1, celle-ci étant supérieure à la valeur de consigne P9ₛₚ, la pression aval à la sortie 21 est régulée et reste sensiblement égale à la valeur de consigne P9ₛₚ. Par ailleurs, le détendeur 9 assure la régulation de la pression aval pour une large gamme de débit dans la mesure où un détendeur n'est pas un régulateur de débit. Autrement dit, la pression aval reste sensiblement égale à P9ₛₚ quelle que soit la valeur du débit molaire du fluide, dans une gamme de débit définie par le dimensionnement préalable du détecteur.

Par ailleurs, en référence à la figure 2C, lorsque la pression aval à la sortie 21 du détendeur 9 est supérieure à la valeur de consigne P9ₛₚ, la membrane 24 est repoussée et le ressort chargé, ce qui se traduit par la fermeture de la vanne. Le détendeur 9 est alors en position de fermeture et bloque l'écoulement de l'hydrogène. Lorsque la pression aval tend à redevenir inférieure à la valeur de consigne P9ₛₚ, la membrane 24 est déplacée sous l'effort exercé par le ressort 26, ce qui ouvre la vanne et autorise l'écoulement de l'hydrogène (fig.2B), à un débit molaire toutefois non régulé. La pression aval reste alors sensiblement égale à la valeur de consigne P9ₛₚ.

Le fonctionnement du système électrochimique est maintenant décrit. En régime nominal, la pression d'entrée anodique P2 de la pile à combustible 2 présente une valeur nominale, par exemple 2,4 bars. Elle est de préférence sensiblement égale à la valeur de la pression d'entrée cathodique, de sorte que l'assemblage membrane électrodes ne présente sensiblement pas de contraintes mécaniques liées à une différence entre les pressions d'entrée anodique et cathodique.

Sur la ligne d'alimentation La, la pression de l'hydrogène en sortie du réservoir 4 peut être de l'ordre de plusieurs dizaines de bars, puis est abaissée par le régulateur de pression 5 à une valeur de consigne P1ₛₚ par exemple comprise entre 3 bars et 20 bars, par exemple égale à 3 bars. La pression amont de l'éjecteur 6, ici sensiblement égale à 3 bars, permet l'aspiration du gaz dans la boucle de recirculation. La pression aval de l'éjecteur 6 est inférieure à la pression amont, et est sensiblement égale à la pression d'entrée P2, ici 2,4 bars. Sur la ligne de recirculation Lrc, la pression en sortie de la pile à combustible 2 est légèrement inférieure à la pression d'entrée P2 du fait de la perte de charge dans les circuits de distribution et les collecteurs de la pile à combustible 2. Elle peut ainsi être sensiblement égale à 2,3 bars.

On souhaite éviter que la pression d'entrée P2 ne devienne inférieure à la valeur seuil minimale Pₘᵢₙ, par exemple ici à 2,0 bars. Aussi, la valeur de consigne P9ₛₚ du détendeur 9 est fixée à la valeur seuil minimale Pₘᵢₙ. Dans la mesure où la pression d'entrée P2 est supérieure à la valeur de consigne P9ₛₚ du détendeur 9, celui-ci est en position de fermeture de sorte que l'hydrogène traverse l'éjecteur 6 et non pas le détendeur 9.

Cependant, la pression d'entrée P2 peut être amenée à diminuer fortement, notamment lorsque la charge électrique 3 impose à la pile à combustible 2 une valeur élevée de courant électrique à fournir. Dans ce cas, le débit molaire d'hydrogène consommé dans la pile à combustible 2 augmente en conséquence, ce qui provoque une augmentation du débit molaire d'hydrogène en entrée de la pile à combustible 2 et donc une diminution de la pression d'entrée P2.

La pression d'entrée P2 peut ainsi tendre à diminuer au-dessous de la valeur seuil minimale Pₘᵢₙ de 2,0 bars, ce qui provoque alors l'ouverture du détendeur 9. L'hydrogène provenant du régulateur de pression 5 traverse ainsi le détendeur 9, qui régule automatiquement la pression aval, et donc la pression d'entrée P2, pour qu'elle reste égale à la valeur de consigne P9ₛₚ de 2,0 bars et donc sensiblement égale à la valeur seuil minimale Pₘᵢₙ.

Ainsi, la pression d'entrée P2, grâce à l'ouverture et à la régulation du détendeur 9, ne peut devenir inférieure à la valeur seuil minimale Pₘᵢₙ imposée, ce qui permet de préserver les propriétés de la pile à combustible et en particulier de l'assemblage membrane électrodes. De plus, le dispositif de régulation présente une dynamique de régulation performante dans la mesure où le temps de réponse du détendeur 9 est très faible et quasi-immédiat. Il n'y a pas en effet de pilotage de la valeur de consigne, comme dans le document US5441821 mentionné précédemment, qui augmente nécessairement le temps de réponse de la régulation. Enfin, le dispositif de régulation simplifie le contrôle-commande de régulation du système électrochimique.

Le détendeur 9 décrit précédemment assure la régulation de la pression aval qui correspond ici à la pression du fluide à la sortie 21 du détendeur. En variante, le détendeur 9 peut être adapté pour que la pression aval prise en compte pour la régulation soit une pression mesurée hors de la sortie 21, sur la ligne d'alimentation La, par exemple au collecteur d'entrée Ce, ou sur la ligne d'évacuation Le par exemple au collecteur de sortie Cs, voire sur la ligne de recirculation Lrc. Le déplacement de la partie mobile 23 dépend ainsi du signal de commande imposé par le volant de commande 27 ou par le dispositif pilote pneumatique d'une part, et du signal de mesure de la pression aval d'autre part.

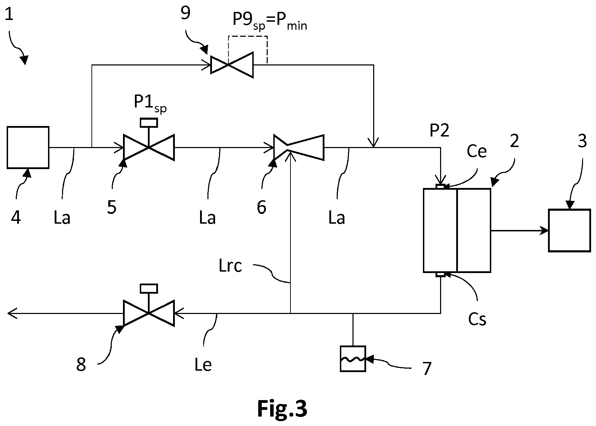

La figure 3 illustre une variante du système électrochimique 1 illustré sur la figure 2A, qui en diffère essentiellement en ce que le détendeur 9 est disposé sur la ligne d'alimentation La en parallèle du régulateur de pression 5 et de l'éjecteur 6.

Dans cet exemple, le régulateur de pression 5 impose ici le débit molaire du fluide d'alimentation dont la valeur est fonction de la valeur de consigne P1ₛₚ.

Comme mentionné précédemment, dans la mesure où le détendeur 9 n'est pas un régulateur de débit molaire, il autorise, en position d'ouverture, une variation du débit molaire d'hydrogène tout en maintenant la pression d'entrée P2 sensiblement égale à la valeur de consigne P9ₛₚ.

Ainsi, en fonctionnement, une forte augmentation du courant électrique imposé à la pile à combustible s'accompagne d'une augmentation du débit molaire d'hydrogène consommé dans la pile à combustible. Il est donc nécessaire que le débit molaire d'hydrogène entrant dans la pile à combustible soit augmenté pour répondre à cette demande. A la différence de l'exemple du document US5441821 mentionné précédemment, dans lequel l'augmentation du débit molaire d'hydrogène injecté est assurée par l'augmentation de la valeur de consigne P1ₛₚ du régulateur de pression 5, le détendeur 9 court-circuite le régulateur de pression 5 en reliant fluidiquement le collecteur d'entrée directement au réservoir d'hydrogène.

Aussi, le détendeur 9 est en mesure de répondre au fort besoin en hydrogène lors d'une augmentation du courant électrique imposé à la pile à combustible 2, tout en maintenant la pression d'entrée P2 supérieure ou égale à la valeur seuil minimale Pₘᵢₙ.

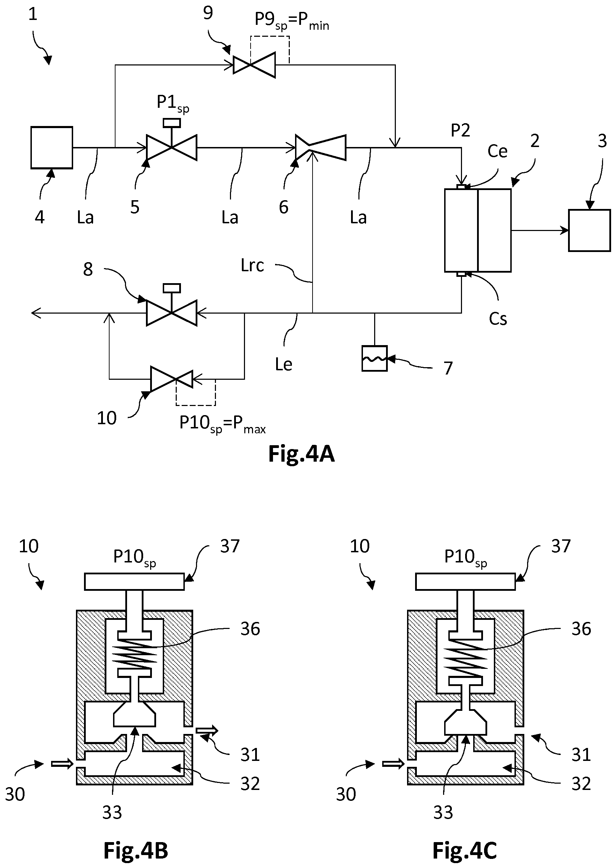

La figure 4A illustre un système électrochimique 1 selon un deuxième mode de réalisation, qui diffère de celui représenté sur la figure 2A essentiellement en ce que le dispositif de régulation est en outre adapté à maintenir la pression d'entrée anodique P2 inférieure ou égale à une valeur seuil maximale Pₘₐₓ.

Pour cela, le dispositif de régulation comporte en outre un déverseur 10 disposé sur la ligne fluidique d'évacuation Le, ici en parallèle de la vanne de purge 8. Le déverseur 10 est un organe de régulation de la pression amont, c'est-à-dire qu'il est adapté à maintenir la pression du fluide entrant à une valeur de consigne P10ₛₚ lorsqu'il est en position d'ouverture, et à occuper une position de fermeture lorsque la pression amont est inférieure à la valeur de consigne P10ₛₚ. Ainsi, la valeur de consigne P10ₛₚ étant égale à la valeur seuil maximale Pₘₐₓ, la pression amont du déverseur 10, et donc la pression d'entrée P2, reste inférieure ou sensiblement égale à la valeur seuil maximale Pₘₐₓ.

Les figures 4B et 4C illustrent un exemple de déverseur 10 conventionnel en position ouvert (fig.4B) et en position fermé (fig.4C). Le déverseur 10 est ici formé d'un conduit interne 32 reliant l'entrée 30 et la sortie 31, comportant une vanne dont une partie mobile 33 est contrainte en déplacement par un organe de rappel 36 tel qu'un ressort. Le ressort 36 est partiellement chargé au moyen d'un volant de commande 37 permettant de fixer la valeur de consigne P10ₛₚ, égale ici à la valeur seuil maximale Pₘₐₓ. En variante, la valeur de consigne P10ₛₚ peut être pilotée, par exemple de manière pneumatique au moyen d'un fluide de commande provenant d'un dispositif pilote, permettant ainsi d'obtenir une plus grande précision sur la définition de la valeur de consigne et un temps de réponse plus court en cas de modification de cette valeur de consigne.

D'une manière générale, en référence à la figure 4B, le déverseur 10 est en position d'ouverture lorsqu'il y a équilibre entre la force de pression amont qu'exerce le fluide entrant sur la partie mobile de la vanne et la force de rappel exercée par le ressort. Ainsi, lorsque la valeur de la pression amont à l'entrée 30 tend à être supérieure à la valeur seuil maximale Pₘₐₓ égale à P10ₛₚ, la pression amont, et donc ici P2, est régulée et reste sensiblement égale à la valeur de consigne P10ₛₚ. Par ailleurs, le déverseur 10 assure la régulation de la pression amont pour une large gamme de débit dans la mesure où un déverseur n'est pas un régulateur de débit. Autrement dit, la pression amont, et donc la pression d'entrée P2, reste sensiblement égale à P10ₛₚ quelle que soit la valeur du débit molaire du fluide, dans une gamme de débit donnée, définie par le dimensionnement préalable du déverseur.

Par ailleurs, en référence à la figure 4C, lorsque la pression amont à la sortie 31 du déverseur 10 est inférieure à la valeur de consigne P10ₛₚ, la partie mobile 33 est repoussée par le ressort chargé, ce qui se traduit par la fermeture de la vanne. Le déverseur 10 est alors en position de fermeture et bloque l'écoulement de l'hydrogène, qui s'écoule alors au sein de la vanne de purge 8. Lorsque la pression amont tend à redevenir supérieure à la valeur de consigne P10ₛₚ, la partie mobile 33 est repoussée sous l'effort exercé par la pression amont du fluide entrant, ce qui ouvre la vanne et autorise l'écoulement de l'hydrogène (fig.4B), à un débit molaire toutefois non régulé. La pression amont est ainsi régulée et reste alors sensiblement égale à la valeur de consigne P10ₛₚ.

En fonctionnement, comme décrit précédemment, le déverseur 10 présente donc une valeur de consigne P10ₛₚ égale à la valeur seuil maximale Pₘₐₓ déterminée. Lorsque la pression amont du déverseur, c'est-à-dire la pression en entrée de celui-ci, est inférieure à cette valeur seuil maximale P10ₛₚ, le déverseur 10 reste en position de fermeture et n'autorise donc aucun écoulement. Cependant, lorsque la pression amont, et donc la pression d'entrée P2, tend à dépasser la valeur de consigne P10ₛₚ et donc la valeur seuil maximale Pₘₐₓ, le déverseur 10 passe en position d'ouverture et autorise l'écoulement. De manière similaire au fonctionnement de détendeur 9, le déverseur 10 régule automatiquement la pression amont, et donc la pression d'entrée P2, de sorte qu'elle reste inférieure ou sensiblement égale à la valeur seuil maximale Pₘₐₓ.

Le déverseur 10 décrit précédemment assure la régulation de la pression amont qui correspond ici à la pression du fluide à l'entrée 30 du déverseur. En variante, le déverseur 10 peut être adapté pour que la pression amont prise en compte pour la régulation soit une pression mesurée hors de l'entrée 30, notamment sur la ligne d'alimentation La, par exemple au collecteur d'entrée Ce, ou sur la ligne d'évacuation Le par exemple au collecteur de sortie Cs, voire sur la ligne de recirculation Lrc. Le déplacement de la partie mobile 33 dépend ainsi du signal de commande imposé par le volant de commande 37 ou par le dispositif pilote pneumatique d'une part, et du signal de mesure de la pression amont d'autre part.

Ainsi, le dispositif de régulation de pression permet de réguler la pression d'entrée anodique P2 dans une plage de pression définie par les valeurs seuils minimale Pₘᵢₙ et maximale Pₘₐₓ, ce qui permet d'éviter toute dégradation prématurée des propriétés de la pile à combustible et donc de l'assemblage membrane électrodes. La dynamique de régulation est particulièrement performante dans la mesure où le temps de réponse est très faible. Par ailleurs, elle peut permettre d'éviter l'utilisation d'une soupape de sécurité disposée en amont de la pile à combustible 2, ce qui simplifie la structure et le coût du système électrochimique.

En variante, le déverseur 10 peut également présenter une fonction de purge momentanée de la ligne fluidique d'évacuation Le de la pile à combustible 2. Elle peut ainsi remplacer ladite vanne de purge 8, la valeur de consigne P10ₛₚ du déverseur 10 étant alors pilotée pour être égale à la valeur seuil maximale Pₘₐₓ en régime de régulation, et pour être égale à une valeur basse de purge, par exemple égale à la pression atmosphérique, en régime de purge momentanée.

Des modes de réalisation particuliers viennent d'être décrits. Différentes variantes et modifications apparaîtront à l'homme du métier.

Comme mentionné précédemment, les modes de réalisation ont été décrits en référence à la régulation de la pression d'entrée anodique de la pile à combustible mais l'invention peut s'appliquer à la régulation de la pression d'entrée cathodique. D'une manière générale, d'autres fluides d'alimentation que l'hydrogène et l'oxygène peuvent être considérés.

## Revendications

1. Système électrochimique (1), comportant :
∘ une pile à combustible (2), comportant un collecteur d'entrée (Ce) et un collecteur de sortie (Cs) adaptés à assurer l'écoulement d'un même fluide d'alimentation dans la pile à combustible (2) ;
∘ un réservoir (4) dudit fluide d'alimentation, relié au collecteur d'entrée (Ce) par une ligne fluidique d'alimentation (La) ;
∘ une boucle de recirculation, comportant un éjecteur (6) disposé sur ladite ligne fluidique d'alimentation (La), et une ligne fluidique de recirculation (Lrc) qui relie le collecteur de sortie (Cs) à l'éjecteur (6) ;
∘ un dispositif de régulation d'une pression dite d'entrée (P2) du fluide d'alimentation représentative d'une pression dudit fluide d'alimentation à l'intérieur de la pile à combustible (2), adapté à ce que la pression d'entrée (P2) reste supérieure ou sensiblement égale à une valeur seuil minimale (Pₘᵢₙ) déterminée ;
**caractérisé en ce que** le dispositif de régulation comporte un détendeur (9), disposé sur la ligne fluidique d'alimentation (La) en parallèle d'au moins l'éjecteur (6), et présentant une valeur de consigne (P9ₛₚ) égale à ladite valeur seuil minimale (Pₘᵢₙ), de sorte que le détendeur (9) maintient la pression d'entrée (P2) égale à la valeur de consigne (P9ₛₚ) et donc à la valeur seuil minimale (Pₘᵢₙ) lorsqu'il est en position d'ouverture, et occupe une position de fermeture lorsque la pression d'entrée (P2) est supérieure à la valeur de consigne (P9ₛₚ).

2. Système électrochimique (1) selon la revendication 1, dans lequel un régulateur de pression (5) est disposé sur la ligne fluidique d'alimentation (La), entre le réservoir (4) et l'éjecteur (6) pour imposer une valeur de pression du fluide d'alimentation en sortie dudit régulateur (5).

3. Système électrochimique (1) selon la revendication 2, dans lequel ledit régulateur de pression (5) est adapté à contrôler le débit molaire du fluide d'alimentation en réponse à la valeur imposée de pression, le détendeur (9) étant disposé en parallèle avec, en outre, le régulateur de pression (5).

4. Système électrochimique (1) selon l'une quelconque des revendications 1 à 3, dans lequel la ligne fluidique d'alimentation est configurée de sorte que la pression du fluide d'alimentation en sortie dudit détendeur (9) est sensiblement égale à ladite pression d'entrée (P2).

5. Système électrochimique (1) selon l'une quelconque des revendications 1 à 4, dans lequel la valeur de consigne (P9ₛₚ) du détendeur (9) est une valeur pilotée de manière pneumatique par un dispositif dit pilote.

6. Système électrochimique (1) selon l'une quelconque des revendications 1 à 5, comportant une ligne fluidique d'évacuation (Le) reliée fluidiquement au collecteur de sortie (Cs), adaptée à évacuer du gaz provenant du collecteur de sortie (Cs), le dispositif de régulation comportant un déverseur (10) disposé sur la ligne d'évacuation (Le) et présentant une valeur de consigne (P10ₛₚ) égale à une valeur seuil maximale (Pₘₐₓ) déterminée, de sorte que le déverseur (10) maintient la pression d'entrée (P2) égale à la valeur de consigne (P10ₛₚ) et donc à la valeur seuil maximale (Pₘₐₓ) lorsqu'il est en position d'ouverture, et occupe une position de fermeture lorsque la pression d'entrée (P2) est inférieure à la valeur de consigne (P10ₛₚ).

7. Système électrochimique (1) selon la revendication 6, comportant un dispositif de purge de la pile à combustible (2), comprenant un organe de commande de la valeur de consigne (P10ₛₚ) du déverseur (10) adapté à porter momentanément ladite valeur de consigne (P10ₛₚ) à une valeur de purge prédéterminée inférieure à la valeur seuil maximale (Pₘₐₓ).

8. Système électrochimique (1) selon la revendication 6 ou 7, comportant un dispositif de purge de la pile à combustible (2), comprenant une vanne de purge (8), disposée sur la ligne fluidique d'évacuation (Le) en parallèle du déverseur (10), adapté à autoriser un écoulement continu de gaz à un débit molaire inférieur au débit molaire du gaz circulant dans la boucle de recirculation.

9. Système électrochimique (1) selon l'une quelconque des revendications 6 à 8, dans lequel la valeur de consigne (P10ₛₚ) du déverseur (10) est une valeur pilotée de manière pneumatique par un dispositif dit pilote.

10. Système électrochimique (1) selon l'une quelconque des revendications 1 à 8, dans lequel la pile à combustible (2) est connectée électriquement à une charge électrique (3) apte à imposer à la pile à combustible (2) une valeur de courant électrique à fournir.

## Patentansprüche

1. Elektrochemisches System (1), umfassend:
- eine Brennstoffzelle (2), umfassend einen Einlassverteiler (Ce) und einen Auslassverteiler (Cs), die angepasst sind, um den Fluss desselben Versorgungsfluids in die Brennstoffzelle (2) sicherzustellen;
- einen Behälter (4) des Versorgungsfluids, der durch eine Fluidzufuhrleitung (La) mit dem Einlassverteiler (Ce) verbunden ist;
- einen Rezirkulationskreislauf, umfassend einen Ejektor (6), der auf der Fluidzufuhrleitung (La) angeordnet ist, und eine Rezirkulationsfluidleitung (Lrc), die den Auslassverteiler (Cs) mit dem Ejektor (6) verbindet;
- eine Vorrichtung zum Regeln eines Drucks, der als Einlassdruck (P2) des Versorgungsfluids bezeichnet wird und für einen Druck des Versorgungsfluids innerhalb der Brennstoffzelle (2) repräsentativ ist, die so angepasst ist, dass der Einlassdruck (P2) größer oder im Wesentlichen gleich einem bestimmten minimalen Schwellenwert (Pₘᵢₙ) bleibt;
**dadurch gekennzeichnet, dass** die Regelungsvorrichtung einen Druckminderer (9) umfasst, der auf der Fluidzufuhrleitung (La) parallel zu minimalens dem Ejektor (6) angeordnet ist und einen Sollwert (P9ₛₚ) aufweist, der gleich dem minimalen Schwellenwert (Pₘᵢₙ) ist, so dass der Druckminderer (9) in der geöffneten Position den Einlassdruck (P2) gleich dem Sollwert (P9ₛₚ) und damit auf dem minimalen Schwellenwert (Pₘᵢₙ) hält und eine geschlossene Position einnimmt, wenn der Einlassdruck (P2) höher als der Sollwert (P9ₛₚ) ist.

2. Elektrochemisches System (1) nach Anspruch 1, wobei an der Fluidzufuhrleitung (La) zwischen dem Behälter (4) und dem Ejektor (6) ein Druckregler (5) angeordnet ist, um einen Druckwert des Versorgungsfluids am Ausgang des Reglers (5) vorzugeben.

3. Elektrochemisches System (1) nach Anspruch 2, wobei der Druckregler (5) angepasst ist, um den Molfluss des Versorgungsfluids als Reaktion auf den vorgegebenen Druckwert zu steuern, wobei der Druckminderer (9) unter anderem parallel zum Druckregler (5) angeordnet ist.

4. Elektrochemisches System (1) nach einem der Ansprüche 1 bis 3, wobei die Fluidzufuhrleitung so konfiguriert ist, dass der Druck des Versorgungsfluids am Ausgang des Druckminderers (9) im Wesentlichen gleich dem Einlassdruck (P2) ist.

5. Elektrochemisches System (1) nach einem der Ansprüche 1 bis 4, bei dem der Sollwert (P9ₛₚ) des Druckminderers (9) ein Wert ist, der pneumatisch durch eine sogenannte Steuervorrichtung gesteuert wird.

6. Elektrochemisches System (1) nach einem der Ansprüche 1 bis 5, umfassend eine Fluidabgabeleitung (Le), die fluidisch mit dem Auslassverteiler (Cs) verbunden ist, und zum Abgeben von Gas aus dem Auslassverteiler (Cs) angepasst ist, wobei die Regelungsvorrichtung einen Überlauf (10) umfasst, der auf der Abgabeleitung (Le) angeordnet ist und einen Sollwert (P10ₛₚ) aufweist, der gleich einem bestimmten maximalen Schwellenwert (Pₘₐₓ) ist, so dass der Überlauf (10) in der geöffneten Position den Einlassdruck (P2) gleich dem Sollwert (P10ₛₚ) und damit dem maximalen Schwellenwert (Pₘₐₓ) hält und eine geschlossene Position einnimmt, wenn der Einlassdruck (P2) niedriger als der Sollwert (PIOsp) ist.

7. Elektrochemisches System (1) nach Anspruch 6, umfassend eine Vorrichtung zum Spülen der Brennstoffzelle (2), umfassend eine Vorrichtung zum Steuern des Sollwerts (P10ₛₚ) des Überlaufs (10), die angepasst ist, um den Sollwert (P10 sp) vorübergehend auf einen vorbestimmten Spülwert zu bringen, der niedriger als der maximale Schwellenwert (Pₘₐₓ) ist.

8. Elektrochemisches System (1) nach Anspruch 6 oder 7, umfassend eine Brennstoffzellenspülvorrichtung (2), umfassend ein Spülventil (8), das auf der Fluidabgabeleitung (Le) parallel zum Überlauf (10) angeordnet ist und angepasst ist, um einen kontinuierlichen Gasstrom mit einem Molfluss zuzulassen, der niedriger ist als der Molfluss des in dem Rezirkulationskreislauf fließenden Gases.

9. Elektrochemisches System (1) nach einem der Ansprüche 6 bis 8, bei dem der Sollwert (P10ₛₚ) des Überlaufs (10) ein Wert ist, der pneumatisch durch eine sogenannte Steuervorrichtung gesteuert wird.

10. Elektrochemisches System (1) nach einem der Ansprüche 1 bis 8, wobei die Brennstoffzelle (2) elektrisch mit einer elektrischen Ladung (3) verbunden ist, die in der Lage ist, der Brennstoffzelle (2) einen bereitzustellenden elektrischen Stromwert vorzugeben.

## Claims

1. Electrochemical system (1) comprising:
∘ a fuel cell (2), comprising an inlet manifold (Ce) and an outlet manifold (Cs) which are engaged to enable the flow of the one same supply fluid through the fuel cell (2);
∘ a reservoir (4) of the said supply fluid, which is connected to the inlet manifold (Ce) by a fluidic supply line (La);
∘ a recirculation loop, comprising an ejector (6) arranged on the said fluidic supply line (La), and a fluidic recirculation line (Lrc) which connects the outlet manifold (Cs) to the ejector (6);
∘ a regulating device that regulates what is referred to as an inlet pressure (P2) of the supply fluid indicative of a pressure of the said supply fluid inside the fuel cell (2), and designed so that the inlet pressure (P2) remains above or substantially equal to a determined minimum threshold value (Pmin);
**characterized in that** the regulating device comprises a pressure reducer (9), arranged on the fluidic supply line (La) in parallel with at least the ejector (6), and having a setpoint value (P9sp) equal to the said minimum threshold value (Pmin), so that the pressure reducer (9) keeps the inlet pressure (P2) equal to the setpoint value (P9sp) and therefore to the minimum threshold value (Pmin) when it is in the open position, and occupies a closed position when the inlet pressure (P2) is above the setpoint value (P9sp).

2. Electrochemical system (1) according to Claim 1, in which a pressure regulator (5) is arranged on the fluidic supply line (La) between the reservoir (4) and the ejector (6) so as to impose a pressure value on the supply fluid leaving the said regulator (5).

3. Electrochemical system (1) according to Claim 2, in which the said pressure regulator (5) is designed to control the molar flow rate of the supply fluid in response to the imposed pressure value, the pressure reducer (9) being arranged in parallel with the pressure regulator (5) also.

4. Electrochemical system (1) according to any one of Claims 1 to 3, in which the fluidic supply line is configured in such a way that the pressure of the supply fluid leaving the said pressure reducer (9) is substantially equal to the said inlet pressure (P2).

5. Electrochemical system (1) according to any one of Claims 1 to 4, in which the setpoint value (P9sp) of the pressure reducer (9) is a value controlled pneumatically by a device referred to as a pilot device.

6. Electrochemical system (1) according to any one of Claims 1 to 5, comprising a fluidic discharge line (Le) fluidically connected to the outlet manifold (Cs), designed to remove gas coming from the outlet manifold (Cs), the regulating device comprising a discharge valve (10) arranged on the discharge line (Le) and having a setpoint value (P10sp) equal to a determined maximum threshold value (Pmax), so that the discharge valve (10) keeps the inlet pressure (P2) equal to the setpoint value (P10sp) and therefore to the maximum threshold value (Pmax) when it is in the open position, and occupies a closed position when the inlet pressure (P2) is below the setpoint value (P10sp).

7. Electrochemical system (1) according to Claim 6, comprising a device for purging the fuel cell (2) comprising a control member that controls the setpoint value (P10sp) of the discharge valve (10) and is designed to move the said setpoint value (P10sp) temporarily to a predetermined purge value below the maximum threshold value (Pmax).

8. Electrochemical system (1) according to Claim 6 or 7, comprising a purge device for purging the fuel cell (2), comprising the purge valve (8), arranged on the fluidic discharge line (Le) in parallel with the discharge valve (10), designed to allow a continuous flow of gas at a molar flow rate lower than the molar flow rate of the gas circulating in the recirculation loop.

9. Electrochemical system (1) according to any one of Claims 6 to 8, in which the setpoint value (P10sp) of the discharge valve (10) is a value controlled pneumatically by a device referred to as a pilot device.

10. Electrochemical system (1) according to any one of Claims 1 to 8, in which the fuel cell (2) is electrically connected to an electrical load (3) able to impose on the fuel cell (2) a value of electrical current to supply.
